# EUROPÄISCHE PATENTSCHRIFT

(11) **EP 3 371 553 B1**
(45) Veröffentlichungstag und Bekanntmachung des Hinweises auf die Patenterteilung: **18.09.2019**
(21) Anmeldenummer: 16797491.4
(22) Anmeldetag: 09.11.2016
(51) Int. Cl.: G01D 5/20, G01B 7/31

(54) **SENSOR FÜR EIN MAGNETLAGER**
SENSOR FOR A MAGNETIC BEARING
CAPTEUR DE PALIER MAGNETIQUE

(30) Priorität: 03.02.2016 EP 16154042
(43) Veröffentlichungstag der Anmeldung: 12.09.2018
(73) Patentinhaber: Siemens Aktiengesellschaft, 80333 München (DE)
(72) Erfinder: ULBRICH, Benjamin Gottfried, 10439 Berlin (DE); WIESCHALLA, Martin, 12305 Berlin (DE)
(86) Internationale Anmeldenummer: PCT/EP2016/077141
(87) Internationale Veröffentlichungsnummer: WO 2017/133799

(56) Entgegenhaltungen:
- EP-A1- 1 801 545
- EP-A1- 2 887 022
- DE-T5-112006 003 635
- US-A- 4 726 962

## Beschreibung

Die Erfindung betrifft eine Sensorvorrichtung für eine Magnetlagervorrichtung aufweisend einen Verschiebungssensor und einen Sensorring.

Weiterhin betrifft die Erfindung eine elektrische rotierende Maschine aufweisend einen um eine Rotationsachse rotierenden Rotor, einen den Rotor umgebenden Stator und mindestens eine Magnetlagervorrichtung, welche mindestens eine derartige Sensorvorrichtung aufweist.

Ferner betrifft die Erfindung ein Verfahren zur Fertigung einer derartigen Sensorvorrichtung.

Eine derartige Sensorvorrichtung für Magnetlagervorrichtungen kommt bevorzugt in schnelldrehenden elektrischen rotierenden Großmaschinen mit einer Drehzahl von mindestens 1000 U/min und einer Leistung von mindestens 1 Megawatt zum Einsatz, da schnelldrehende Rotoren mit anspruchsvoller Rotordynamik zunehmend mit aktiven Magnetlagern gelagert werden.

Bei einer Magnetlagerung wird die Position des Rotors während der Rotation erfasst und die Position des Rotors durch Ausüben magnetischer Kräfte auf den Rotor ausgeregelt, sodass eine Verlagerung des Rotors im Magnetlager minimiert wird. Eingangsgröße für eine derartige Regelungstechnik ist die Position des Rotors, die durch eine Messung an beispielsweise vier gleichmäßig verteilten Positionen am Umfang kontaktlos, beispielsweise mit einem induktiven Verschiebungssensor, welcher auch Wirbelstromsensor genannt wird, gemessen wird. Die Qualität des gemessenen Sensorsignals ist direkt für die Zuverlässigkeit des Regelprozesses und damit die Leistungsfähigkeit des Magnetlagers verantwortlich. Bei der Messung des Sensorsignals an einem Sensortarget ist insbesondere der elektrische Run-Out des Sensortargets, welcher beispielsweise durch Materialunterschiede beeinflusst wird, von Bedeutung. Dieser wird minimiert indem Werkstoffe mit sehr kleiner magnetischer Permeabilität als Sensortarget auf dem Rotor zum Einsatz kommen.

Das Sensortarget ist ein sogenannter Sensorring, der ein massiver Hohlzylinders aus Stahl mit oben genannten Eigenschaften ist. Der Sensorring wird separat vom Rest des Rotors gefertigt. Aufgrund der hohen Drehzahlen und thermischer Belastung kommt es im Betrieb der elektrischen rotierenden Großmaschine im Betrieb zum Abheben des Sensorrings und damit zu einer Verfälschung des Sensorsignals, dass in dieser Form dann zu Fehlern in der Regelung führen kann.

Die Offenlegungsschrift EP 2 887 022 A1 beschreibt ein Sensortarget für Magnetlager, das eine ringförmige Baugruppe aus magnetischem Material umfasst. Die ringförmige Baugruppe ist auf einer im Allgemeinen ringförmigen Anordnung aus nicht magnetischem Material angebracht. Die im Allgemeinen ringförmige Anordnung aus nicht-magnetischem Material weist zumindest einen ringförmigen Schlitz auf und kann aus einem billigeren Material, beispielsweise Aluminium, hergestellt sein. Der ringförmige Schlitz sorgt für Flexibilität, die einen Betrieb über einen weiten Temperaturbereich ermöglicht.

Der Erfindung liegt die Aufgabe zugrunde, eine Sensorvorrichtung für eine Magnetlagervorrichtung anzugeben, welche im Vergleich zum Stand der Technik eine höhere Zuverlässigkeit bei hohen Drehzahlen und Leistungen aufweist.

Diese Aufgabe wird erfindungsgemäß durch eine Sensorvorrichtung für eine Magnetlagervorrichtung gelöst, welche einen Verschiebungssensor und einen Sensorring aufweist, wobei der Sensorring die Form eines Hohlzylinders aufweist und dafür vorgesehen ist, kraftschlüssig mit einer Welle einer elektrischen rotierenden Maschine verbunden zu werden, wobei der Verschiebungssensor vom Sensorring durch einen Luftspalt getrennt ist, wobei der Sensorring einen Trägerring aus einem ersten Material und ein Sensortarget aus einem zweiten Material aufweist wobei das zweite Material des Sensortargets eine geringere Permeabilität und/oder eine höhere elektrische Leitfähigkeit als das erste Material des Trägerrings aufweist, wobei das zweite Material des Sensortargets ein paramagnetischer Edelstahl ist.

Der Verschiebungssensor ist beispielsweise ein Wirbelstromsensor, welcher eine Induktivität aufweist und dafür geeignet ist, über den Luftspalt eine Impedanz und bevorzugt eine Änderung der Impedanz des Sensortargets auf dem Sensorring zu messen, um beispielsweise die räumliche Position einer Welle zu ermitteln. Das Sensortarget wird beispielsweise vom Wirbelstromsensor für eine Impedanzmessung herangezogen. Der Trägerring stellt beispielsweise eine auch bei hohen Drehzahlen belastbare mechanische Verbindung des Sensortargets mit einer Welle her.

Dies ist vorteilhaft, da durch die verschiedenen Materialien mit vorzugsweise unterschiedlichen mechanischen und elektrischen Eigenschaften eine Trennung der Funktionen in einer Komponente vorgenommen werden kann. Beispielsweise erhöht das erste Material des Tragrings die Robustheit des Sensorrings gegenüber Abheben durch Rotation und thermischer Last und das zweite Material weist beispielsweise für die Sensorik optimale Materialeigenschaften auf. Dadurch wird eine höhere Zuverlässigkeit erreicht.

Das zweite Material des Sensortargets weist eine geringere Permeabilität und/oder höhere elektrische Leitfähigkeit als das erste Material des Trägerrings auf.

Durch die geringere Permeabilität und/oder höhere elektrische Leitfähigkeit des ersten Materials treten beispielsweise geringere Leitfähigkeits- und/oder Permeabilitätsschwankungen, insbesondere auf der Oberfläche des Sensortargets, auf. Derartige Schwankungen aufgrund von Toleranzen, welche auch als elektrischer Run-Out bezeichnet werden, verursachen eine Verfälschung des gemessenen Sensorsignals. Daher ist eine geringere Permeabilität und/oder geringere elektrische Leitfähigkeit des zweiten Materials im Vergleich zum ersten Material vorteilhaft.

Das zweite Material des Sensortargets ist ein paramagnetischer Edelstahl. Ein paramagnetischer Edelstahl ist beispielsweise Austenit. Dies ist besonders vorteilhaft, da durch die geringe magnetische Permeabilität ein kleiner elektrischer Run-Out erreicht wird.

Weiterhin wird die Aufgabe durch eine elektrische rotierende Maschine gelöst, welche einen um eine Rotationsachse rotierenden Rotor, einen den Rotor umgebenden Stator und mindestens eine Magnetlagervorrichtung aufweist, wobei die Magnetlagervorrichtung mindestens eine derartige Sensorvorrichtung aufweist.

Durch die magnetische Lagerung, welche mit einer derartigen Sensorvorrichtung betrieben wird, wird ein sehr hoher Wirkungsgrad der elektrischen rotierenden Maschine mit einer hohen Zuverlässigkeit der Lagerung, auch bei hohen Drehzahlen und hohen Leistungen, erreicht.

Ferner wird die Aufgabe durch ein Verfahren zur Fertigung einer derartigen Sensorvorrichtung gelöst, wobei in einem ersten Schritt der Trägerring aus einem ersten Material hergestellt wird, wobei in einem folgenden Schritt das Sensortarget, welches aus einem zweiten Material hergestellt wird, mit dem Trägerring zu einem Sensorring verbunden wird.

Dies ist vorteilhaft, da durch die verschiedenen Materialien mit vorzugsweise unterschiedlichen mechanischen und elektrischen Eigenschaften eine Trennung der Funktionen in einer Komponente vorgenommen werden kann. Dadurch wird eine höhere Zuverlässigkeit erreicht.

In einer vorteilhaften Ausgestaltung ist das zweite Material des Sensortargets durch eine stoffschlüssige Verbindung und/oder formschlüssige Verbindung mit dem ersten Material des Trägerrings verbunden. Dies ist besonders vorteilhaft, da mit einer stoffschlüssigen und/oder formschlüssigen Verbindung hohe Kräfte und Momente übertragen werden können. Der Platzbedarf insbesondere einer stoffschlüssigen Verbindung ist sehr gering. Daher hält die stoffschlüssige Verbindung zwischen den beiden Materialien auch bei hohen Drehzahlen und hohen Leistungen zuverlässig.

Bei einer weiteren Ausführungsform ist das zweite Material des Sensortargets an der radialen Außenseite des Trägerrings mit dem ersten Material verbunden. Daher ist das erste Material des Trägerrings direkt kraftschlüssig mit der Welle verbunden und erhöht beispielsweise die Robustheit des Sensorrings während das zweite Material, welches beispielsweise für die Sensorik optimale Materialeigenschaften aufweist, näher am Verschiebungssensor positioniert ist.

Vorteilhaft weist der Trägerring an seiner radialen Außenseite eine Kavität auf, wobei die Kavität mit dem zweiten Material des Sensortargets ausgefüllt ist. Durch die Kavität ist die Verbindung des zweiten Materials des Sensortargets mit dem ersten Material des Trägerrings stabiler.

Bei einer vorteilhaften Ausgestaltung verjüngt sich die Breite der Kavität radial nach außen hin. Durch die Verjüngung der Kavität entsteht eine formschlüssige Verbindung zwischen dem Sensortarget und dem Trägerring. Dies ist vorteilhaft, da durch diesen Formschluss das Sensortarget, beispielsweise auch bei hohen Fliehkräften, stabilisiert wird.

Bei einer weiteren Ausführungsform weist das erste Material des Trägerrings eine größere mechanische Festigkeit als das zweite Material des Sensortargets auf. Unter der mechanischen Festigkeit versteht man hierbei den Widerstand des ersten Materials gegen Verformung und Trennung. Dies ist vorteilhaft, da sich durch die größere mechanische Festigkeit des ersten Materials des Tragrings, welcher beispielsweise mit der Welle über eine kraftschlüssige Verbindung verbunden ist, die Robustheit des Sensorrings gegenüber Abheben, was durch hohe Drehzahlen und thermische Belastung verursacht werden kann, erhöht wird. Durch die höhere Robustheit des Sensorrings wird die Wahrscheinlichkeit einer Verfälschung des gemessenen Sensorsignals verringert, was zu einer höheren Zuverlässigkeit, insbesondere für die Regelung, führt.

Bei einer vorteilhaften Ausgestaltung ist das erste Material des Trägerrings ein hochfester Stahl. Dadurch bietet der Trägerring beispielsweise die Möglichkeit deutlich erhöhte Schrumpfübermaße zu realisieren und damit die Robustheit gegenüber Abheben durch Rotation und thermischer Last signifikant zu steigern.

In einer vorteilhaften Ausgestaltung wird im folgenden Schritt die Verbindung des zweiten Materials des Sensortargets mit dem ersten Material des Trägerrings durch eine stoffschlüssige Verbindung hergestellt. Dies ist besonders vorteilhaft, da eine stoffschlüssige Verbindung die erforderliche Festigkeit aufweist, um den erforderlichen mechanischen und thermischen Anforderungen, beispielsweise bei einer Drehzahl von mindestens 1000 U/min und einer Leistung von mindestens 1 Megawatt, zu genügen.

Vorteilhaft wird die stoffschlüssige Verbindung durch Auftragsschweißen oder Diffusionsschweißen hergestellt. Beim Auftragsschweißen wird beispielsweise das erste Material des Trägerrings mit dem zweiten Material des Sensortargets beschichtet. Beim Diffusionsschweißen werden beispielsweise das erste Material und das zweite Material unter hohem Druck und hoher Temperatur zusammengepresst. Beide Verfahren sind vorteilhaft, da mit ihnen eine optimal ausgebildete Verbindung, insbesondere bei höheren Temperaturen, bei geringer Durchmischung gewährleistet ist.

In einer weiteren Ausführungsform wird beim Diffusionsschweißen Nickel als Diffusionsstoff verwendet. Dies ist besonders vorteilhaft, da sich Nickel metallurgisch als besonders geeigneter Diffusionsstoff für eine feste Verbindung erwiesen hat.

In einer vorteilhaften Ausgestaltung wird im ersten Schritt der Trägerring derartig hergestellt, dass sich an seiner radialen Außenseite eine Kavität ausbildet, wobei im folgenden Schritt das Sensortarget in die Kavität eingefügt wird und mit dem Trägerring verbunden wird. Durch die Kavität wird die Verbindung des zweiten Materials des Sensortargets mit dem ersten Material des Trägerrings stabilisiert.

Im Folgenden wird die Erfindung anhand der in den Figuren dargestellten Ausführungsbeispiele näher beschrieben und erläutert.

Es zeigen:
- FIG 1: einen Längsschnitt einer Welle mit einem Sensorring,
- FIG 2: einen Längsschnitt einer Welle mit einer ersten Ausführungsform eines Komposit-Sensorrings,
- FIG 3: einen Längsschnitt einer Welle mit einer zweiten Ausführungsform eines Komposit-Sensorrings,
- FIG 4: einen Längsschnitt einer Welle mit einer dritten Ausführungsform eines Komposit-Sensorrings,
- FIG 5: einen Längsschnitt einer Welle mit einer vierten Ausführungsform eines Komposit-Sensorrings,
- FIG 6: eine dreidimensionale Schnittdarstellung einer Sensorvorrichtung mit einem Komposit-Sensorring,
- FIG 7: einen Längsschnitt einer Sensorvorrichtung mit einem Komposit-Sensorring und
- FIG 8: eine elektrische rotierende Maschine.

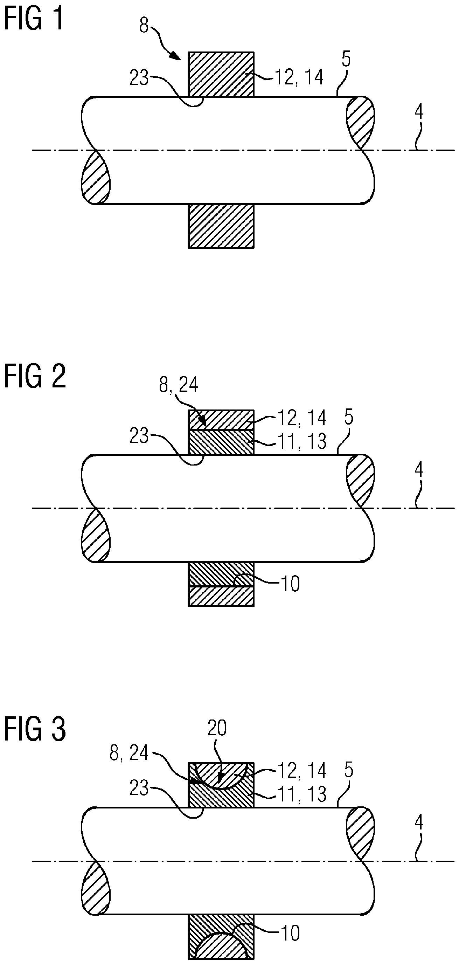

FIG 1 zeigt einen Längsschnitt einer Welle 5 mit einem Sensorring 8. Die Welle 5 mit dem Sensorring 8, welche mit aktiven Magnetlagern gelagert ist, ist für einen Rotor mit anspruchsvoller Rotordynamik vorgesehen, wobei die anspruchsvolle Rotordynamik beim Betrieb einer elektrischen rotierenden Maschine mit einer Drehzahl von mindestens 1000 U/min und einer Leistung von mindestens 1 Megawatt entsteht.

Bei der magnetischen Lagerung der Welle 5 wird die Position der Welle 5 erfasst, wobei magnetische Kräfte auf die Welle 5 ausgeübt werden, sodass die Verlagerung der Welle 5 im Magnetlager minimiert wird. Eingangsgröße für eine derartige Regelung ist die Position der Welle 5, welche an mehreren vorzugsweise gleichmäßig verteilten Positionen mit einem Verschiebungssensor, beispielsweise einem Wirbelstromsensor, gemessen wird. Die Qualität des Messsignals hat direkten maßgeblichen Einfluss auf die Güte des Regelprozesses und Leistungsfähigkeit des Magnetlagers. Der Sensorring 8 fungiert hierbei in einer Sensorvorrichtung als Sensortarget 12 für den Verschiebungssensor und ist derartig ausgestaltet, dass seine äußere radiale Oberfläche über den kompletten Umfang nahezu den gleichen Abstand zur Rotationsachse 4 aufweist. Die Messung wird durch Abweichungen von der idealen Kreisform der Messebene, dem mechanischen Run-Out, und durch Restmagnetismus und/oder Materialunterschiede, dem elektrischen Run-Out, beeinflusst. Derartige mechanische und/oder elektrische Abweichungen täuschen eine Verlagerung der Welle 5 vor. Deshalb dürfen die genannten Abweichungen bestimmte Werte nicht überschreiten.

Am Sensorring 8 ist der elektrische Run-Out des Sensortargets 12, welcher beispielsweise durch Materialunterschiede beeinflusst wird, von besonderer Bedeutung, da mit einem geringen elektrischen Run-Out die Wahrscheinlichkeit einer fehlerhaften Messung während der Regelung minimiert wird. Dieser wird durch die Verwendung eines Werkstoffs mit sehr kleiner magnetischer Permeabilität als Sensortarget 12 auf der Welle 5 minimal.

Der Sensorring 8 in FIG 1 besteht aus einem zweiten Material 14. Das zweite Material 14 ist ein paramagnetischer Edelstahl, insbesondere Austenit. Insbesondere durch die geringe magnetische Permeabilität wird ein sehr geringer elektrischer Run-Out erreicht.

Die Innenseite des rotationssymmetrischen Sensorrings ist mit einer kraftschlüssigen Verbindung 23 drehfest mit der Außenseite der um eine Rotationsachse 4 rotierbaren Welle 5 verbunden. Der Kraftschluss zwischen dem Sensorring 8 und der Welle 5 wird durch eine Schrumpfverbindung erreicht.

Bei einer derartigen Schrumpfverbindung wird der Sensorring 8 beispielsweise um einige hundert Grad Celsius, erhitzt, wodurch sich der Innendurchmesser des Sensorrings 8 aufgrund von Wärmeausdehnung, welche auch thermische Expansion genannt wird, vergrößert. Der durch die thermische Expansion vergrößerte Sensorrings 8 wird im erhitzten Zustand über die Welle 5, welche aus Stahl besteht und einen geringfügig kleineren Außendurchmesser als der Innendurchmesser des erhitzten Sensorrings 8 aufweist, gestülpt. Beim Abkühlen des Sensorrings 8 findet eine Wärmeschrumpfung, welche auch thermische Kontraktion genannt wird, statt wodurch der Sensorring 8 die vorherige Größe wieder bekommt und mechanisch fest mit der Welle 5 verbunden ist.

Das zweiten Material 14 des Sensorrings 8 weist relativ kleine Werte der Dehngrenze auf, weshalb das Übermaß und somit die Robustheit gegenüber Abheben des Sensorringes 8 im Betrieb klein ist. Gleiches gilt gegenüber der Sensitivität auf Abheben gegenüber thermischer Belastung und infolge auftretender thermischer Ausdehnung.

FIG 2 zeigt einen Längsschnitt einer Welle 5 mit einer ersten Ausführungsform eines Komposit-Sensorrings 24. Ein derartiger Komposit-Sensorring 24 ist ein Sensorring 8, welcher aus mehreren Bauteilen 11, 12, welche aus unterschiedlichen Materialien 13, 14 bestehen, aufgebaut ist. Der übrige Aufbau entspricht dem aus FIG 1.

Durch die verschiedenen Bauteile 11, 12 wird eine Trennung der Funktionen des Sensorrings 8 vorgenommen. Der Sensorring 8 wird aus einem Trägerring 11 und einem Sensortarget 12, welches aus dem in FIG 1 beschriebenen zweiten Material 14 besteht, gefertigt. Das auf der Außenseite des Sensorrings 8 aufgebrachte Sensortarget 12 bietet deshalb die Vorteile eines kleinen elektrischen Run-Outs. Der Trägerring 11 wird aus einem ersten Material 13, einem sehr festen und schweißbaren Werkstoff hergestellt. Er trägt das Sensortarget 12 an seiner Außenseite und wird an seiner Innenseite kraftschlüssig mit der Welle 5 verbunden. Das erste Material ist vorzugsweise einem hochfesten Stahl, welcher die Möglichkeit bietet, deutlich erhöhte Schrumpfübermaße zu realisieren und damit die Robustheit gegenüber Abheben durch Rotation und thermischer Last signifikant zu steigern.

Das zweite Material 14 des Sensortargets 12 ist an der radialen Außenseite des Trägerrings 11 mit dem ersten Material 13 über eine stoffschlüssige Verbindung 10 verbunden. Die stoffschlüssige Verbindung 10 wird durch Auftragsschweißen oder Diffusionsschweißen hergestellt.

FIG 3 zeigt einen Längsschnitt einer Welle 5 mit einer zweiten Ausführungsform eines Komposit-Sensorrings 24, wobei der Trägerring 11 an der radialen Außenseite eine Kavität 20 aufweist, in welcher sich das zweite Material 14 des Sensortargets 12 befindet. Der Trägerring 11 mit dem Sensortarget 12 weist die Form eines Hohlzylinders auf und ist über den Trägerring 11 drehfest mit der Welle 5 verbunden. Der übrige Aufbau entspricht dem aus FIG 2. Es besteht eine stoffschlüssige Verbindung 10, welche durch Auftragsschweißen oder Diffusionsschweißen hergestellt wird, zwischen dem Trägerring 11 und dem Sensortarget 12.

Die Kavität 20 im Trägerring 11, welche mit dem zweite Material 14 des Sensortargets 12 gefüllt ist, ist rund, kann aber auch Ecken aufweisen. Durch die Kavität 20, durch welche das Sensortarget 12 eine größere Berührungsfläche mit dem Trägerring 11 hat, wird die Stabilität und Robustheit der stoffschlüssigen Verbindung zwischen dem ersten Material 13 und dem zweiten Material 14 erhöht und dadurch zusätzlich eine Abheben des Sensortargets 12 verhindert.

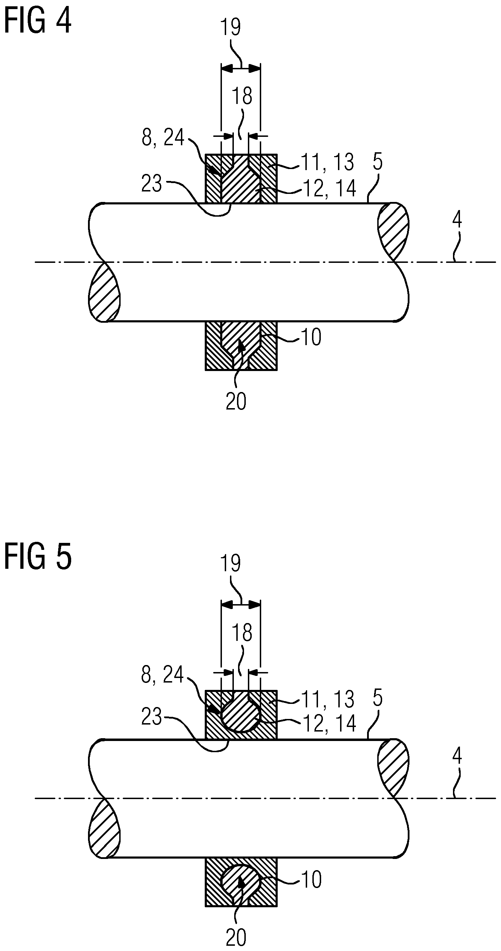

FIG 4 zeigt einen Längsschnitt einer Welle 5 mit einer dritten Ausführungsform eines Komposit-Sensorrings 24, wobei der Trägerring 11 eine Kavität 20 aufweist, welche mit dem zweiten Material 14 des Sensortargets 12 gefüllt ist und wobei sich die axiale Breite der Kavität 20 in radiale Richtung nach außen verjüngt. Der übrige Aufbau entspricht dem aus FIG 3. Durch die Verjüngung der Kavität entsteht zusätzlich zur stoffschlüssigen Verbindung 10 eine formschlüssige Verbindung zwischen dem Trägerring 11 und dem Sensortarget 12. Dies ist vorteilhaft, da durch diesen Formschluss das Sensortarget 12 bei hohen Fliehkräften zusätzlich stabilisiert wird.

Die Kavität 10 in FIG 4 ist so ausgestaltet, dass neben dem Trägerring 11 auch das Sensortarget 12 mechanisch mit der Welle 5 verbunden sind. Die kraftschlüssige Verbindung 23 des Sensorrings 8 zur Welle 5 wird zumindest durch den Trägerring 11 gebildet.

FIG 5 zeigt einen Längsschnitt einer Welle 5 mit einer vierten Ausführungsform eines Komposit-Sensorrings 24. Die Kavität 20 des Trägerrings 11 ist, verglichen mit FIG 4, abgerundet ausgebildet verjüngt sich kontinuierlich. Der Trägerring ist kraftschlüssig mit der Welle 5 verbunden. Der übrige Aufbau entspricht dem aus FIG 4.

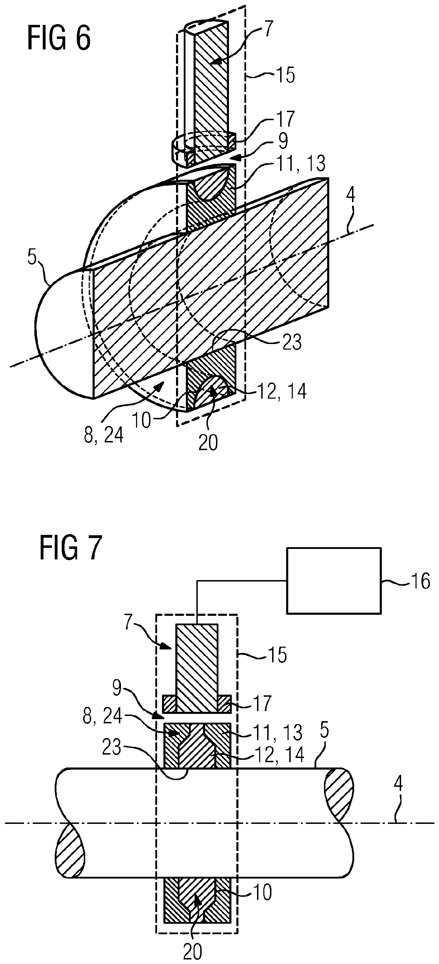

FIG 6 zeigt eine dreidimensionale Schnittdarstellung einer Sensorvorrichtung 15 mit einem Komposit-Sensorring 24. Der exemplarisch wie in FIG 3 ausgeführte Komposit-Sensorring 24 ist kraftschlüssig mit der Welle 5 verbunden. Ein Verschiebungssensor 7, welcher als Wirbelstromsensor ausgeführt ist, befindet sich, durch einen Luftspalt 9 getrennt, über dem Sensortarget 12. Der Verschiebungssensor 7 ist dafür vorgesehen berührungslos eine Abstandsänderung zum rotierenden Komposit-Sensorring 24 und damit zur rotierenden Welle 5 zu messen.

FIG 7 zeigt einen Längsschnitt einer Sensorvorrichtung 15 mit einem Komposit-Sensorring 24, welcher exemplarisch wie in FIG 4 dargestellt ausgeführt ist. Der übrige Aufbau der Sensorvorrichtung 15 entspricht dem aus FIG 6. Der als Wirbelstromsensor ausgeführte Verschiebungssensor 7 wird durch ein Wechselstromsignal gespeist und erzeugt durch die Spule 17 ein elektromagnetisches Wechselfeld, welches im rotierenden Sensortarget 12 Wirbelströme induziert. Über eine Auswerteeinrichtung 16, welche mit dem Verschiebungssensor 7 verbunden ist, wird die Impedanz der Spule 17 gemessen. Die Impedanz wird durch die im Sensortarget 12 induzierten Wirbelströme, deren Betrag und Phase von der Größe des Luftspalts 9 abhängig sind, beeinflusst.

Eine Abstandsänderung zwischen dem Sensorring 8 und damit der Welle 5 und dem Verschiebungssensor 7 wird über die Änderung der Impedanz der Spule 17 gemessen. Die Impedanzänderung wird als Änderung der Amplitude und/oder der Phase erfasst und ausgewertet. Die Auswerteeinrichtung 16 gibt ein dem Abstand proportionales analoges Strom- oder Spannungssignal aus, welches als Eingangsgröße für die Regelungstechnik eines Magnetlagers geeignet ist. Die Regelungstechnik und das Magnetlager sind aus Gründen der Übersichtlichkeit nicht dargestellt.

Die Messung der Impedanzänderung wird durch Abweichungen von der idealen Kreisform des Sensorrings 8 beeinflusst, wobei diese Abweichung als mechanischer Run-Out bezeichnet wird. Weiterhin treten bei einem derartigen Wirbelstrommeßverfahren bekannte Messeffekte auf, die auf Leitfähigkeits- oder Permeabilitätsschwankungen vorwiegend in der Oberfläche des Sensortargets 12 beruhen und als elektrischer Run-Out bezeichnet werden.

Daher besteht das Sensortarget 12 aus einem Material mit sehr homogenen elektrischen und insbesondere magnetischen Eigenschaften, beispielsweise ein austenitischer Edelstahl mit paramagnetischen Eigenschaften. Der Trägerring 11 aus dem ersten Material 13 ist aus einem sehr festen und schweißbaren Werkstoff, beispielsweise ein harter Stahl, welcher dafür geeignet ist das Sensortarget 12 auch bei großen Fliehkräften zu tragen. Weiterhin ist der Stahl für den Trägerring dafür geeignet hohe Schrumpfübermaße von mehr als 100 *µ*m zu realisieren, um auch bei hohen Fliehkräften und großen thermischen Belastungen drehfest mit der Welle 5 verbunden zu sein.

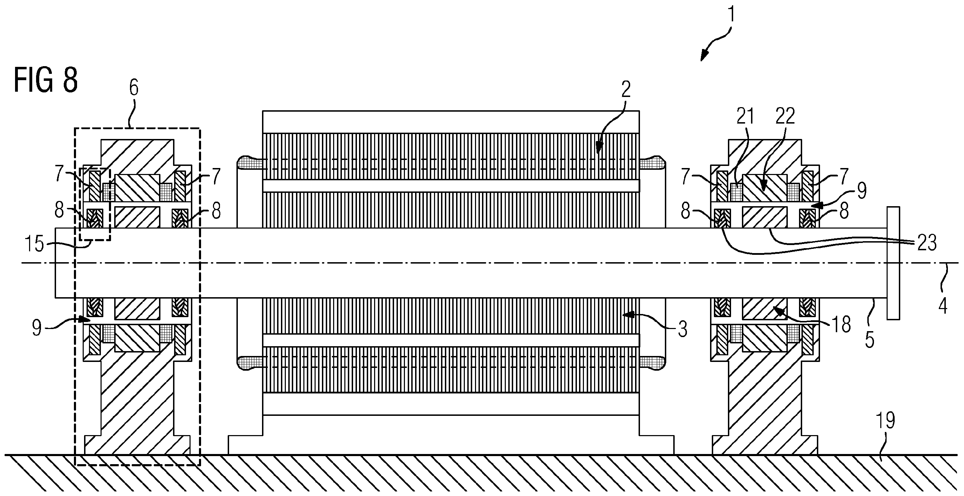

FIG 8 zeigt eine elektrische rotierende Maschine 1, welche auf einem Fundament 19 steht. Die elektrische rotierende Maschine 1 weist einen um eine Rotationsachse 4 rotierbaren Rotor 3 und einen den Rotor 3 umgebenden Stator 2 auf. Die Welle 5 des Rotors ist an beiden axialen Enden durch jeweils eine aktive Magnetlagervorrichtung 6 berührungslos gelagert.

Eine aktive Magnetlagervorrichtung 6 weist einen Magnetlagerrotor 18, welcher über eine kraftschlüssige Verbindung 23 mit der Welle 5 verbunden ist, und einen den Magnetlagerrotor 18 umgebenden Elektromagneten 22 auf. Der Elektromagnet 22 weist Wicklungen 21 auf, die von einem Gleichstrom gespeist werden und ein magnetisches Gleichfeld erzeugen. Zusätzlich kann neben dem Elektromagneten 22 ein Permanent eingesetzt werden um das magnetische Gleichfeld zu erzeugen. Mit Hilfe des Magnetischen Gleichfeldes wird die Welle 5 näherungsweise in der Mitte des Elektromagneten 22 gehalten und magnetisch nahezu reibungslos gelagert.

Um die Lage der Welle 5 mit dem Magnetlagerrotor 18 im Magnetfeld des Elektromagneten 22 ermitteln zu können, sind an mindestens vier gleichmäßig verteilten Positionen um den Umfang der Welle 5 verteilt Sensorvorrichtungen 15, welche wie in FIG 6 und in FIG 7 gezeigt ausgeführt sind, angeordnet. Die Sensorvorrichtungen 15 sind dafür vorgesehen die Position der Welle 5 des Rotors 3 in der radialen Ebene zu ermitteln und weisen einen Verschiebungssensor 7 und einen Sensorring 8, welcher als Komposit-Sensorring 24 ausgeführt ist, auf. Die Magnetlagervorrichtung 6 ist exemplarisch als Radiallager ausgeführt. Eine Verwendung der Sensorvorrichtung 15 für ein Axiallager ist ebenfalls Gegenstand der Patentanmeldung, wobei im Falle eines Axiallagers die Sensorvorrichtung 15 dafür vorgesehen ist, die Position der Welle 5 in axialer Richtung zu ermitteln.

Zusammenfassend betrifft die Erfindung eine Sensorvorrichtung 15 für eine Magnetlagervorrichtung 6 aufweisend einen Verschiebungssensor 7 und einen Sensorring 8, welcher die Form eines Hohlzylinders aufweist und dafür vorgesehen ist, kraftschlüssig mit einer Welle 5 einer elektrischen rotierenden Maschine 1 verbunden zu werden, wobei der Verschiebungssensor 7 vom Sensorring 8 durch einen Luftspalt 9 getrennt ist. Um im Vergleich zum Stand der Technik eine höhere Zuverlässigkeit bei hohen Drehzahlen und Leistungen zu erreichen, wird vorgeschlagen, dass der Sensorring 8 einen Trägerring 11 aus einem ersten Material 13 und ein Sensortarget 12 aus einem zweiten Material 14 aufweist.

## Patentansprüche

1. Sensorvorrichtung (15) für eine Magnetlagervorrichtung (6) aufweisend einen Verschiebungssensor (7) und einen Sensorring (8), welcher die Form eines Hohlzylinders aufweist und dafür vorgesehen ist, kraftschlüssig mit einer Welle (5) einer elektrischen rotierenden Maschine (1) verbunden zu werden,
wobei der Verschiebungssensor (7) vom Sensorring (8) durch einen Luftspalt (9) getrennt ist,
wobei der Sensorring (8) einen Trägerring (11) aus einem ersten Material (13) und ein Sensortarget (12) aus einem zweiten Material (14) aufweist,
wobei das zweite Material (14) des Sensortargets (12) eine geringere Permeabilität und/oder eine höhere elektrische Leitfähigkeit als das erste Material (13) des Trägerrings (11) aufweist,
wobei das zweite Material (14) des Sensortargets (12) ein paramagnetischer Edelstahl ist.

2. Sensorvorrichtung (15) nach Anspruch 1,
wobei das zweite Material (14) des Sensortargets (12) durch eine stoffschlüssige Verbindung (10) und/oder formschlüssige Verbindung mit dem ersten Material (13) des Trägerrings (11) verbunden ist.

3. Sensorvorrichtung (15) nach einem der Ansprüche 1 oder 2, wobei das zweite Material (14) des Sensortargets (12) an der radialen Außenseite des Trägerrings (11) mit dem ersten Material (13) verbunden ist.

4. Sensorvorrichtung (15) nach einem der Ansprüche 1 bis 3, wobei der Trägerring (11) an seiner radialen Außenseite eine Kavität (20) aufweist, wobei die Kavität (20) mit dem zweiten Material (14) des Sensortargets (12) ausgefüllt ist.

5. Sensorvorrichtung (15) nach Anspruch 4,
wobei sich die Breite der Kavität (20) radial nach außen hin verjüngt.

6. Sensorvorrichtung (15) einem der Ansprüche 1 bis 5,
wobei das erste Material (13) des Trägerrings (11) eine größere mechanische Festigkeit als das zweite Material (14) des Sensortargets (12) aufweist.

7. Sensorvorrichtung (15) nach einem der vorherigen Ansprüche,
wobei das erste Material (13) des Trägerrings (11) ein hochfester Stahl ist.

8. Elektrische rotierende Maschine (1) aufweisend einen um eine Rotationsachse (4) rotierenden Rotor (3), einen den Rotor (3) umgebenden Stator (2) und mindestens eine Magnetlagervorrichtung (6), welche mindestens eine Sensorvorrichtung (15) nach einem der Ansprüche 1 bis 7 aufweist.

9. Verfahren zur Fertigung einer Sensorvorrichtung (15) nach einem der Ansprüche 1 bis 7,
wobei in einem ersten Schritt der Trägerring (11) aus einem ersten Material (13) hergestellt wird,
wobei in einem folgenden Schritt das Sensortarget (12), welches aus einem zweiten Material (14) hergestellt wird, mit dem Trägerring (11) zu einem Sensorring (8) verbunden wird.

10. Verfahren nach Anspruch 9,
wobei im folgenden Schritt die Verbindung des zweiten Materials (14) des Sensortargets (12) mit dem ersten Material (13) des Trägerrings (11) durch eine stoffschlüssige Verbindung (10) hergestellt wird.

11. Verfahren nach Anspruch 10,
wobei die stoffschlüssige Verbindung (10) durch Auftragschweißen oder Diffusionsschweißen hergestellt wird.

12. Verfahren nach Anspruch 11,
wobei beim Diffusionsschweißen Nickel als Diffusionsstoff verwendet wird.

13. Verfahren nach einem der Ansprüche 10 bis 12,
wobei im ersten Schritt der Trägerring (11) derartig hergestellt wird, dass sich an seiner radialen Außenseite eine Kavität (20) ausbildet,
wobei im folgenden Schritt das Sensortarget (12) in die Kavität (20) eingefügt wird und mit dem Trägerring (11) verbunden wird.

## Claims

1. Sensor apparatus (15) for a magnetic bearing apparatus (6) having a motion sensor (7) and a sensor ring (8), which has the shape of a hollow cylinder and is intended to be connected to a shaft (5) of an electrical rotating machine (1) in a force-fitting manner,
wherein the motion sensor (7) is separated from sensor ring (8) by an air gap (9),
wherein the sensor ring (8) has a carrier ring (11) composed of a first material (13) and a sensor target (12) composed of a second material (14),
wherein the second material (14) of the sensor target (12) has lower permeability and/or higher electrical conductivity than the first material (13) of the carrier ring (11),
wherein the second material (14) of the sensor target (12) is a paramagnetic stainless steel.

2. Sensor apparatus (15) according to claim 1,
wherein the second material (14) of the sensor target (12) is connected to the first material (13) of the carrier ring (11) by a cohesive connection (10) and/or positive-fitting connection.

3. Sensor apparatus (15) according to one of claims 1 or 2, wherein the second material (14) of the sensor target (12) is connected to the first material (13) on the radial outer side of the carrier ring (11).

4. Sensor apparatus (15) according to one of claims 1 to 3, wherein the carrier ring (11) has on its radial outer side a cavity (20), wherein the cavity (20) is filled with the second material (14) of the sensor target (12).

5. Sensor apparatus (15) according to claim 4,
wherein the width of the cavity (20) tapers radially toward the outside.

6. Sensor apparatus (15) according to one of claims 1 to 5, wherein the first material (13) of the carrier ring (11) has greater mechanical strength than the second material (14) of the sensor target (12).

7. Sensor apparatus (15) according to one of the preceding claims,
wherein the first material (13) of the carrier ring (11) is a high-strength steel.

8. Electrical rotating machine (1) having a rotor (3) that rotates about an axis of rotation (4), a stator (2) surrounding the rotor (3) and at least one magnetic bearing apparatus (6) having at least one sensor apparatus (15) according to one of claims 1 to 7.

9. Method for producing a sensor apparatus (15) according to one of claims 1 to 7,
wherein, in a first step, the carrier ring (11) is produced composed of a first material (13),
wherein, in a following step, the sensor target (12), which is produced composed of a second material (14), is connected to the carrier ring (11) to form a sensor ring (8).

10. Method according to claim 9,
wherein, in the following step, the connection of the second material (14) of the sensor target (12) to the first material (13) of the carrier ring (11) is established by a cohesive connection (10).

11. Method according to claim 10,
wherein the cohesive connection (10) is established by overlay welding or diffusion welding.

12. Method according to claim 11,
wherein, during the diffusion welding, nickel is used as the diffusion material.

13. Method according to one of claims 10 to 12,
wherein, in the first step, the carrier ring (11) is produced such that a cavity (20) forms on its radial outer side, wherein, in the following step, the sensor target (12) is inserted into the cavity (20) and connected to the carrier ring (11).

## Revendications

1. Dispositif (15) à capteur pour un dispositif (6) de palier magnétique, comportant un capteur (7) de déplacement et une bague (8) de capteur, qui a la forme d'un cylindre creux et qui est prévu pour être relié à coopération de force à un arbre (5) d'une machine (1) électrique tournante, le capteur (7) de déplacement étant séparé de la bague (8) de capteur par un entrefer (9),
dans lequel la bague (8) de capteur a une bague (11) de support en un premier matériau (13) et une cible (12) de capteur en un deuxième matériau (14),
dans lequel le deuxième matériau (14) de la cible (12) de capteur a une perméabilité plus petite et/ou une conductivité électrique plus grande que le premier matériau (13) de la bague (11) de support,
dans lequel le deuxième matériau (14) de la cible (12) de capteur est un acier fin paramagnétique.

2. Dispositif (15) à capteur suivant la revendication 1,
dans lequel le deuxième matériau (14) de la cible (12) de capteur est relié par une liaison (10) à coopération de matière et/ou par une liaison à complémentarité de forme au premier matériau (13) de la bague (11) de support.

3. Dispositif (15) à capteur suivant l'une des revendications 1 ou 2,
dans lequel le deuxième matériau (14) de la cible (12) de capteur est relié, du côté extérieur radial de la bague (11) de support, au premier matériau (13).

4. Dispositif (15) à capteur suivant l'une des revendications 1 à 3,
dans lequel la bague (11) de support a, du côté extérieur radial, une cavité (20), la cavité (20) étant remplie du deuxième matériau (14) de la cible (12) de capteur.

5. Dispositif (15) à capteur suivant la revendication 4,
dans lequel la largeur de la cavité (20) se rétrécie radialement vers l'extérieur.

6. Dispositif (15) à capteur suivant l'une des revendications 1 à 5,
dans lequel le premier matériau (13) de la bague (11) de support a une résistance mécanique plus grande que le deuxième matériau (14) de la cible (12) de capteur.

7. Dispositif (15) à capteur suivant l'une des revendications précédentes,
dans lequel le premier matériau (13) de la bague (11) de support est un acier très résistant.

8. Machine (1) électrique tournante, ayant un rotor (3), tournant autour d'un axe (4) de rotation, un stator (2) entourant le rotor (3) et au moins un dispositif (6) de palier magnétique, qui a au moins un dispositif (15) à capteur suivant l'une des revendications 1 à 7.

9. Procédé de fabrication d'un dispositif (15) à capteur suivant l'une des revendications 1 à 7,
dans lequel, dans un premier stade, on fabrique la bague (11) de support en un premier matériau (13),
dans lequel, dans un stade suivant, on relie la cible (12) de capteur, qui est fabriqué en un deuxième matériau (14), à la bague (11) de support, en une bague (8) de capteur.

10. Procédé suivant la revendication 9,
dans lequel, dans le stade suivant, on produit la liaison du deuxième matériau (14) de la cible (12) de capteur au premier matériau (13) de la bague (11) de support, par une liaison (10) à coopération de matière.

11. Procédé suivant la revendication 10,
dans lequel on produit la liaison (10) à coopération de matière par soudage à superposition ou soudage par diffusion.

12. Procédé suivant la revendication 11,
dans lequel, dans le soudage par diffusion, on utilise du nickel comme matière de diffusion.

13. Procédé suivant l'une des revendications 10 à 12,
dans lequel, dans le premier stade, on produit la bague (11) de support de manière à constituer une cavité (20) du côté extérieur radial,
dans lequel, dans le stade suivant, on insère la cible (12) de capteur dans la cavité (20) et on la relie à la bague (11) de support.
